# EUROPEAN PATENT APPLICATION

(11) **EP 1 841 215 A2**
(43) Date of publication of application: **03.10.2007**
(21) Application number: 07105480.3
(22) Date of filing: 02.04.2007
(51) Int. Cl.: H04N 5/262

(54) **Apparatus and method for out-of-focus shooting using portable terminal**

(30) Priority: 31.03.2006 KR 20060029413
(71) Applicant: Samsung Electronics Co., Ltd., Suwon-si, Gyeonggi-Do (KR)
(72) Inventor: Choi, Kwang-Cheol, Gyeonggi-do (KR)
(74) Representative: Grünecker, Kinkeldey, Stockmair & Schwanhäusser Anwaltssozietät

(57) **Abstract**

Provided is an apparatus and method for shooting an image of an object using a portable terminal. The apparatus includes a first camera module, a second camera module, and an effect processor. The first camera module shoots a first image of an object, and the second camera module shoots a second image of the object. The effect processor searches for a block that corresponds to the first image from the second image, checks whether the block searched for from the second image is a block belonging to a background. When the block searched for from the second image is the block belonging to the background, the effect processor blurs the block searched for from the second image. The two camera modules are mounted in the portable camera module to discriminate an object from a background of an image, so that out-of-focus shooting that allows only the object to be focused is realized.

## Description

The present invention relates generally to an apparatus and a method for shooting an image of an object using a portable terminal, and more particularly, to an out-of-focusing technology allowing an object to be focused and a background image to be blurred using camera modules of a portable terminal.

Nowadays, a portable terminal is used by virtually everybody, and service providers and terminal manufacturers competitively develop products (or services) to provide unique features, different from other companies, to attract customers.

For example, the portable terminal has evolved into a multimedia apparatus providing a variety of functions, including a phone book, games, short message service, e-mail, morning or wake-up calls, an MP 3 reproduction function, a digital camera function, and wireless Internet service .

Particularly, as portable terminals mounting a camera module therein are now commonplace, a user of a portable terminal can easily shoot various images anytime and anywhere. Also, since the number of pixels supported by the camera module mounted in the portable terminal increases, the camera module may serve as a digital camera.

However, generally, since a camera module provided to a portable terminal has a very short focal length and a very small fixed aperture, a depth of field of the camera module is deep. Accordingly, it is very difficult to realize an image where only an object located at a predetermined distance is focused, and instead, the camera module of the portable terminal provides only a shooting function that produces an image where both an object and a background are focused on the whole. Here, the depth of field of the camera module means a distance range where a focus of the camera module that allows a sharp image of an object can be located on the image. Though taking pictures using an out-of-focus technique which allows an object to be focused and thus emphasized and a background to be blurred by controlling a depth of field of a camera module can be used, it is difficult to realize the out-of-focus technique in taking pictures using the portable terminal.

Therefore, an apparatus and a method for providing variety of shooting modes to a user by controlling a depth of field in a portable terminal that allows a shooting function is needed.

The present invention is designed to substantially solve at least the above problems and/or disadvantages and to provide at least the advantages below. Accordingly, the object of the present invention is to provide an apparatus and a method of a portable terminal having a shooting function that allows a depth-of-field controlled image.

This object is solved by the subject matter of the independent claims.

Preferred embodiments are defined in the dependent claims.

An aspect of the present invention is to provide an apparatus and a method for providing an out-of-focus function to a portable terminal by mounting two camera modules therein.

According to one aspect of the present invention, an apparatus for shooting an image of an object using a portable terminal, the apparatus includes a first camera module for shooting a first image of the object; a second camera module for shooting a second mage of the object simultaneously with the first camera module; and an effect processor for searching for a block that corresponds to the first image from the second image, checking whether the block searched for from the second image is a block belonging to a background, and when the block searched for from the second image is the block belonging to the background, blurring the block searched for from the second image.

According to another aspect of the present invention, a method for shooting an image of an object using a portable terminal, the method includes obtaining a first image using a first camera module, and obtaining a second image using a second camera module; selecting a block that has not been compared with the second image from a plurality of divided blocks each having a predetermined size and belonging to the first image; searching for the selected block from the second image to check whether the selected block is a block belonging to a background or a block belonging to an object; and when the selected block is the block belonging to the background, blurring the selected block.

The present invention will become more apparent from the following detailed description when taken in conjunction with the accompanying drawings in which:
FIG. 1 is a block diagram of a portable terminal according to the present invention;
FIGs. 2A and 2B are views illustrating an image obtained by a camera module of a portable terminal of the present invention;
FIG. 3 is a flowchart illustrating a process for obtaining a depth-of-field controlled image in a portable terminal according to the present invention;
FIGs. 4A, 4B and 4C are views illustrating an image where blurring is applied according to the present invention;
FIG. 5 is a flowchart illustrating a method for correcting a position of an image such that a first image and a second image coincide with each other in a portable terminal according to the present invention;
FIGs. 6A and 6B are views illustrating images for position correction in a portable terminal according to the present invention; and
FIG. 7 is a flowchart illustrating a method for checking a position for each block in order to control a depth of field in a portable terminal according to the present invention.

Preferred embodiments of the present invention will be described herein below with reference to the accompanying drawings. In the following description, well-known functions or constructions are not described in detail since they would obscure the invention in unnecessary detail.

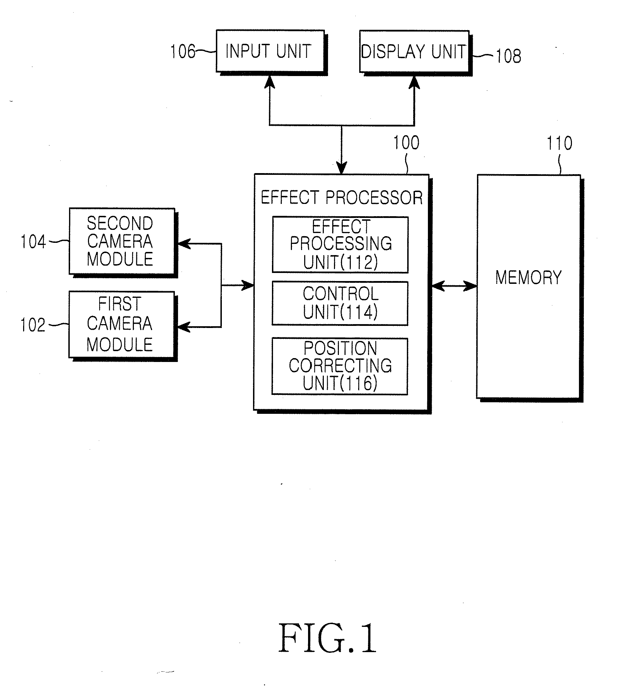

FIG. 1 is a block diagram of a portable terminal according to the present invention. Referring to FIG. 1, the portable terminal includes an effect processor 100, a first camera module 102, a second camera module 104, an input unit 106, a display unit 108, and a memory 110. The effect processor 100 includes an effect processing unit 112, a control unit 114, and a position correcting unit 116. Though the effect processing unit 112, the control unit 114, and the position correcting unit 116 may be incorporated into the effect processor 100, they are shown to be separated for detailed description thereof.

When a block of a first image is determined to be a block corresponding to a background by the effect processing unit 112, the effect processor 100 blurs the block of a first image. The control unit 114 divides the first image into blocks having a predetermined size using the first camera 102 and selects a block used for comparing with the second image from the divided blocks.

Images focused in the same direction are obtained using the first and second camera modules 102 and 104 and an object is discriminated from a background. When obtaining the images fails due to some physical cause, the position correcting unit 116 corrects focus directions such that the focus directions are the same direction by checking up/down deviations of images (the first image and the second image) shot by the first camera module 102 and the second camera module 104.

The physical cause of the failure can include a case where, when a user fixes a position of the first and second camera modules 102 and 104 of the portable terminal allowing the first and second camera modules 102 and 104 to perform shooting in different directions, a focus is minutely tilted; and a case where a portable terminal having a fine error in a focus direction of the first and second camera modules 102 and 104 is manufactured, the first and second camera modules 102 and 104 of the portable terminal being fixed such that they perform shooting in the same direction.

The effect processing unit 112 receives a block of all blocks of the first image that has been selected by the control unit 114, searches for a position of a block coinciding with the selected block from the second image, checks a position difference between the selected block and the block searched from the second image, when the checked position difference is smaller than a predetermined position critical value, determines that the block belongs to a background, not an object, to create an image to which a blurring effect is applied using a low pass filter.

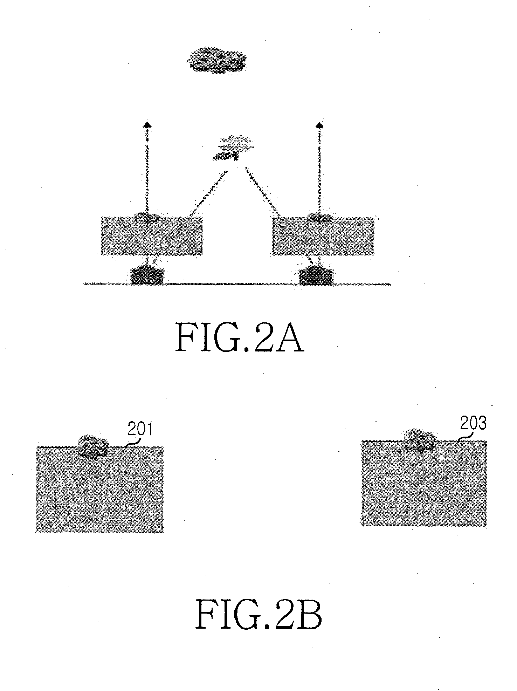

The position critical value serves as a reference value used for determining whether the block is an object or a part of the background. For example, referring to FIG. 2A, when shooting is performed with a flower at a close distance focused as an object and a tree at a long distance used for a background using the first and second camera modules 102 and 104, a first image 201 where the flower, which is the object at the close distance, is located on the right side, and a second image 203 where the flower, which is the object at the long distance, is located on the left side are obtained as illustrated in FIG. 2B. Here, the background having no position change has a high critical value, and the object having a high position change has a low critical value.

In a method for blurring using a low pass filter, when color deviation of the block is smaller than a predetermined color deviation critical value, average values of colors and brightness of a plurality of pixels neighboring a pixel contained in the block are checked. The color and brightness of the pixel contained in the block are adjusted to the checked average values.

The first and second camera modules 102 and 104 shoot an image of an object in order to obtain a depth-of-field controlled image. The memory 110 stores a depth-of-field controlled shot image according to the present invention. The input unit 106 includes numeric keys of digits 0-9 and a plurality of function keys, such as a Menu key, a Cancel (Delete) key, a Confirmation key, a Talk key, an End key, an Internet Connection key, and Navigation keys (or direction keys). In addition, the input unit 106 includes a shooting button for shooting an image of an object.

The display unit 108 displays status information generated during operations, numerals and characters, moving pictures and still pictures. A color Liquid Crystal Display (LCD) may be used for the display unit 108, and outputs stored messages, and displays the first and second images shot by the first and second camera modules 102 and 104.

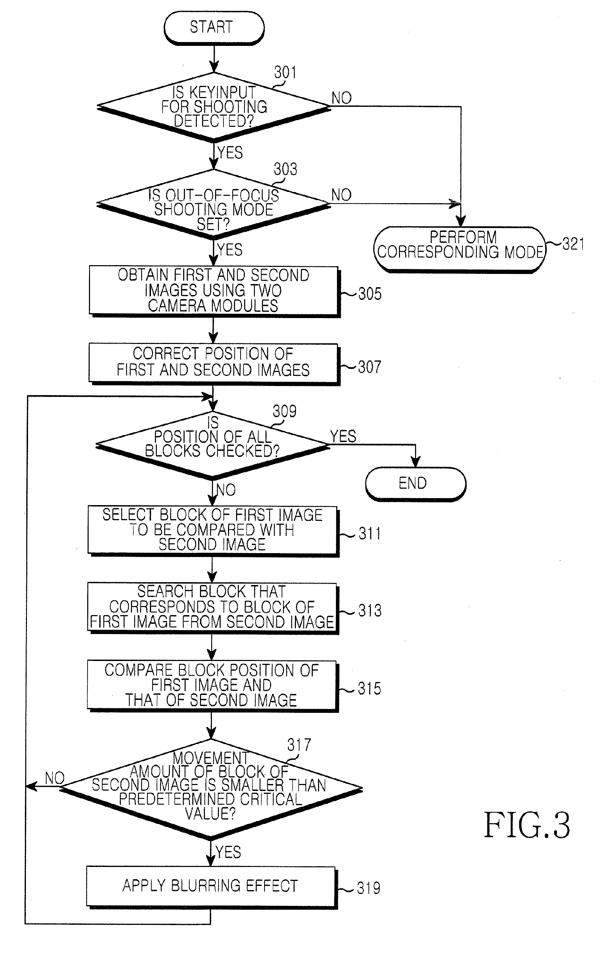

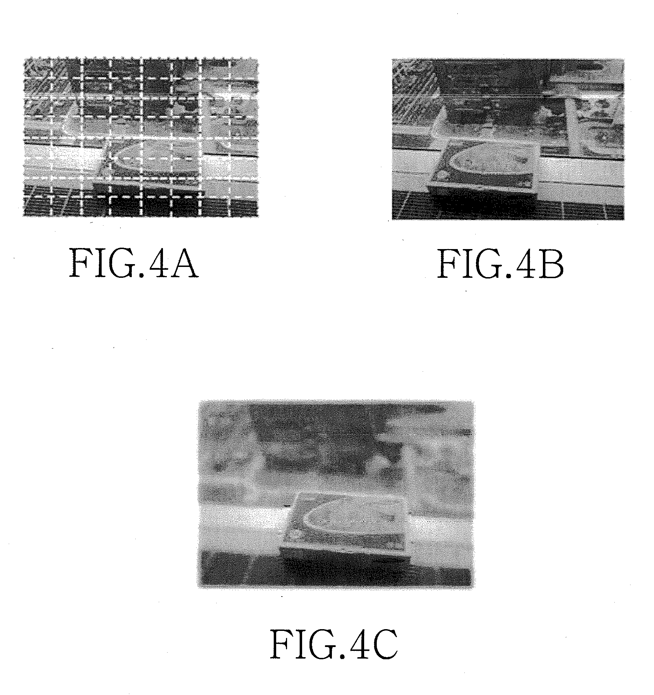

FIG. 3 is a flowchart illustrating a process for obtaining a depth-of-field controlled image in a portable terminal according to the present invention, and FIG. 4 is a view illustrating an image where blurring is applied in the portable terminal having the two camera modules.

Referring to FIG. 3, in step 301, the effect processor 100 checks whether a key for shooting an image of an object is input through a user's key manipulation. When the key is not input, the effect processor 100 performs a corresponding function (e.g., a stand-by mode), in step 321.

On the other hand, when the key is input, the effect processor 100 performs step 303 to determine whether an out-of-focus shooting mode is set. Here, the out-of-focus shooting mode means a shooting mode used for shooting an image of an object, having an effect where only the object is focused and thus a complicated background image is blurred. When the out-of-focus shooting mode is not set, the effect processor 100 performs a corresponding function (e.g., a general shooting mode) in step 321.

On the other hand, when the out-of-focus shooting mode is set, the effect processor 100 performs step 305 to obtain the first and second images using two camera modules (the first and second camera modules) mounted in the portable terminal. The first and second images are images obtained using the first and second camera modules 102 and 104, respectively. One of the first and second images serves as a reference image used for checking a movement of an object. In the following description, the first image is described as the reference image.

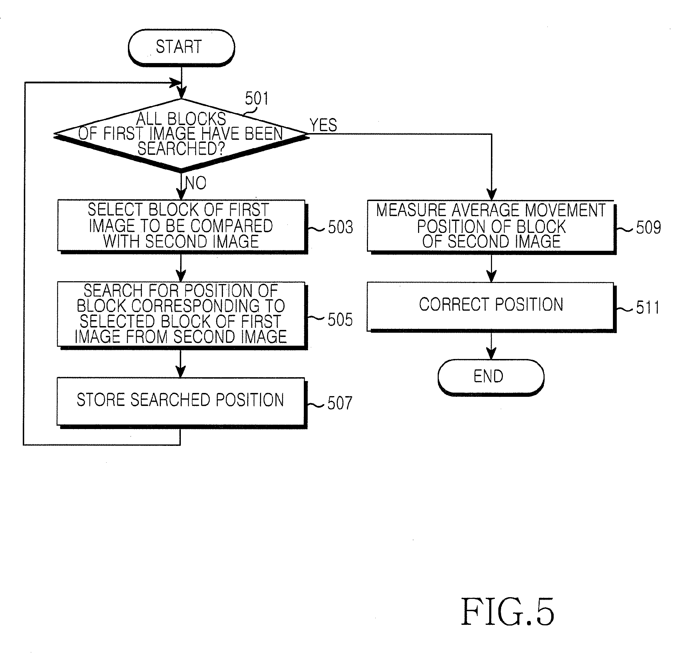

After that, the effect processor 100 performs step 307 to control the position correcting unit 116 to correct a position of the first and second images. Preferably, the two camera modules 102 and 104 obtain images focused in the same direction, respectively, in order to discriminate an object from the background. The correction of the first and second images means a process performed to have focus directions of the two camera modules coincide with each other using software when the two camera modules 102 and 104 fail to obtain the images focused in the same direction. The position correction of an image in step 307 will be described in detail with reference to FIG. 5.

When the position correction of the image is completed in step 307, the effect processor 100 performs step 309 to divide the first image into a plurality of blocks and checks whether searching of a block corresponding to the first image from the second image is completed for all blocks of the first images.

Checking of the first and second images is performed as follows. Referring to FIG. 4A, the first image is divided into a plurality of blocks having a predetermined size (e.g., horizontal 8 pixels x vertical 8 pixels, or horizontal 16 pixels x vertical 16 pixels). The blocks are sequentially selected from a first block. A position of a block belonging to the second image of FIG. 4B and coinciding with a block of the first image is checked. A process of dividing the first image into a plurality of blocks is initially performed once. Also, the coinciding block means a region of the second image that corresponds to a divided block of the first image.

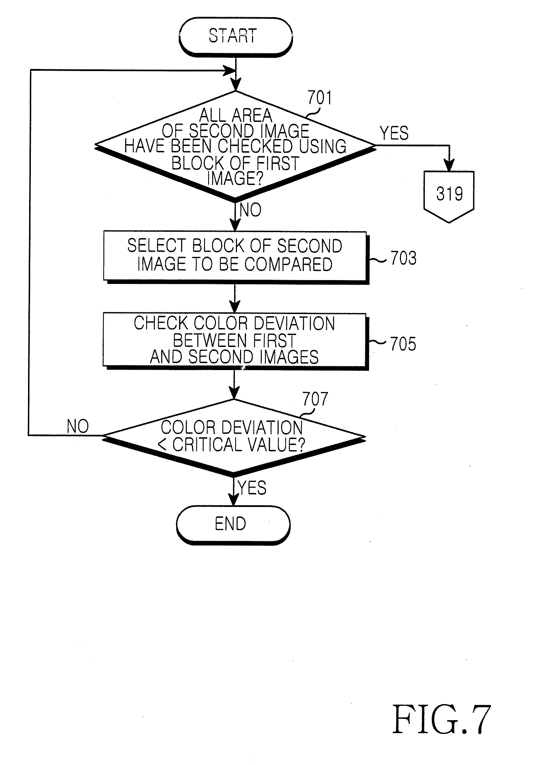

When the searching of the block corresponding to the first image from the second image is completed for all blocks of the first images, the effect processor 100 ends the present process. On the other hand, when the searching of the block corresponding to the first image from the second image is not completed for all blocks of the first images, the effect processor 100 performs step 311 to select a block of the first image that is not searched from the second image, and performs step 313 to search for a position of the block coinciding with the selected block of the first image from the second image using a predetermined method. Step 313 will be described in detail with reference to FIG. 7.

After that, the effect processor 100 performs step 315 to compare a block position of the first image with that of the second image, and performs step 317 to check whether the block of the second image has moved a smaller distance than a predetermined position critical value. When the block has moved a greater distance than the predetermined position critical value, the effect processor 100 determines that the block is an object, and performs step 309 again without performing blurring on the block.

On the other hand, when the block has moved a smaller distance than the predetermined position critical value, the effect processor 100 determines that the block is a background, not the object, and performs step 319 to control the effect processing unit 112 to perform blurring so that a corresponding block of the first image is blurred. After that, the effect processor 100 repeatedly performs steps 309 to 317 to obtain a depth-of-field controlled and out-of-focus processed image as illustrated in FIG. 4C.

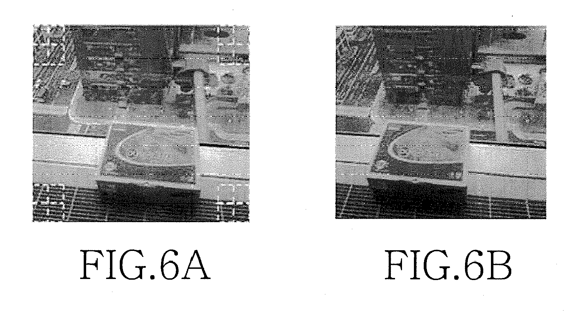

FIG. 5 is a flowchart illustrating a method for correcting a position of a first image and a second image in a portable terminal according to the present invention, and FIG. 6 is a view illustrating images for position correction in a portable terminal according to the present invention.

Referring to FIG. 5, in step 501, the position correcting unit 116 checks whether the searching of the block corresponding to the first image from the second image is completed for all blocks belonging to the first images and having the predetermined size in order to correct a position of the first and second images. The checking is performed in the following way. Referring to FIG. 6A, the blocks each having the predetermined size are assigned to a region (e.g., up and down portions at left and right sides) of the first image shot by the first camera module 102 and having a small possibility that an object exists, and the blocks of the first image are searched from the second image so that a position of the searched block is determined.

When the searching of the block corresponding to the first image from the second image is not completed for all blocks, the position correcting unit 116 performs step 503 to select an unselected block of the blocks belonging to the first images and having the predetermined size, and performs step 505 to search for a position of a block belonging to the second image and corresponding to the position of the block belonging to the first image. After the searching for a position of the block belonging to the second image corresponding to the position of the block belonging to the first image, the position correcting unit 116 performs step 507 store the searched position in order to calculate an average movement value indicating that a distance the second image has moved relative to the first image. After that, the position correcting unit 116 performs the steps again starting from step 501.

When the searching of the block corresponding to the first image from the second image is completed for all blocks belonging to the first images in step 501, the position correcting unit 116 performs step 509 to measure an average movement value using a difference between the searched position (step 507) of the block belonging to the second image and the position of the block belonging to the first image. Also, the position correcting unit 116 performs step 511 to vertically move the second image the measured average movement value and correct the position of the second image.

FIG. 7 is a flowchart illustrating a process for checking a block that corresponds to a block of the first image from the second image in a portable terminal having two camera modules according to the present invention.

Referring to FIG. 7, in step 701, the effect processor 112 examines whether searching of a block corresponding to a selected block of the first image from the second image is completed for all regions of the second image. When the searching of a block corresponding to a selected block of the first image from the second image is not completed, the effect processing unit 112 performs step 703 to select from the second image a block to be compared with a block of the first image that has been selected by the control unit 114 of the processor 100 in step 311 of FIG. 3.

In a method of selecting from the second image a block to be compared with a block of the first image, searching is started from a position corresponding to a position of a block belonging to the first image. When the searching is performed, all regions of the second image are searched by navigating up/down and left/right regions using one pixel at a time or a pixel range having a predetermined size.

After that, the effect processing unit 112 performs step 705 to check a color deviation difference between the selected block of the first image and a block selected from the second image. Here, the effect processing unit 112 checks whether the selected block of the first image corresponds to the block selected from the second image by comparing a color of a pixel or a block belonging to the first image with a color of a pixel or a block belonging to the second image.

In a method of calculating the color difference, a position of a pixel contained in the block selected from the first image is compared with each corresponding pixel contained in a block (a block searched from the second image), which is an object for comparison, and an absolute value of a color deviation between pixels is calculated over the searched block. The smaller the color deviation, the closer the selected block of the second image is to the selected image of the first image as a result of checking sum of calculated absolute values.

After that, the effect processing unit 112 performs step 707 to check whether the color deviation checked in step 705 is smaller than a predetermined color deviation critical value. The predetermined color deviation critical value is used for checking a block of the second image that corresponds to the selected block of the first image. When the color deviation is greater than or equal to the predetermined color deviation critical value, the effect processing unit 112 determines that the block of the second image does not correspond to the selected block of the first image, and repeatedly performs steps 701 to 707 to search for a block of the second image that corresponds to the selected block of the first image. On the other hand, when the color deviation is smaller than the predetermined color deviation critical value, the effect processing unit 112 determines the block of the second image corresponds to the selected block of the first image, and ends the present process.

When the searching of the block of the second image that corresponds to the selected block of the first image is completed for all regions of the second image, the effect processing unit 112 performs step 319 (of FIG. 3) to perform blurring on a corresponding block.

While the invention has been shown and described with reference to certain preferred embodiments thereof, it will be understood by those skilled in the art that various changes in form and details may be made therein without departing from the scope of the invention as defined by the appended claims.

## Claims

1. A portable terminal for shooting an image of an object comprising:
a first camera module for shooting a first image of an object;
a second camera module for shooting a second image of the object simultaneously with the first camera module; and
an effect processor for searching for a block that corresponds to the first image from the second image, checking whether the block searched for from the second image is a block belonging to a background, and when the block searched for from the second image is the block belonging to the background, blurring the block searched for from the second image.

2. The portable terminal of claim 1, wherein the effect processor comprises:
a control unit for dividing the first image into a plurality of blocks each having a predetermined size, and selecting from the plurality of blocks a block to be compared with the second image; and
an effect processing unit for searching for a block that corresponds to the selected block of the first image from the second image, checking whether the block searched from the second image is a block belonging to the background or a block belonging to the object, and when the block searched from the second image is the block belonging to the background, blurring the block searched from the second image.

3. The portable terminal of claim 1 or 2, wherein the first and second camera modules shoot an image of an object in the same focus direction.

4. The portable terminal of claim 2, wherein the effect processor searches for a block that corresponds to the selected block of the first image from the second image, measures a position difference between the selected block of the first image and the block searched for from the second image, and when the measured position difference is smaller than a predetermined critical value, determines the block searched for from the second image as a block belonging to the background.

5. The portable terminal of one of claims 1 to 4, wherein the blurring comprises:
checking average values of colors and brightness of a plurality of pixels neighboring a pixel contained in the block; and
controlling color and brightness of the pixel contained in the block using the checked average values.

6. The portable terminal of one of claims 1 to 5, wherein the effect processor comprises a position correcting unit for correcting a focus of the first and second images such that the focus of the first image coincides with that of the second image before whether the block searched for from the second image is the block belonging to the background or the block belonging to the object is checked.

7. The portable terminal of claim 6, wherein the position correcting unit searches for a block belonging to the first image and having a predetermined size from the second image, measures a position difference between the block searched for from the second image and the block belonging to the first image and having the predetermined size, measures an average movement value of the block searched for from the second image using the measured position difference, and corrects a position of the second image by moving the second image the measured average movement value.

8. The portable terminal of claim 7, wherein the position difference is measured by measuring a vertical position difference of the first and second images that is caused by a change in a focus direction of the first and second camera modules.

9. A method for shooting an image of an object using a portable terminal, the method comprising the steps of:
obtaining a first image using a first camera module, and obtaining a second image using a second camera module;
selecting a block that has not been compared with the second image from a plurality of divided blocks each having a predetermined size and belonging to the first image and;
searching for the selected block from the second image to check whether the selected block is a block belonging to a background or a block belonging to an object; and
when the selected block is the block belonging to the background, blurring the selected block.

10. The method of claim 9, wherein the steps of selecting the block through blurring the selected block are repeated until the step of selecting the block that has not been compared with the second image from the plurality of divided blocks is completed for all the divided blocks.

11. The method of claim 9 or 10, wherein the step of checking whether the selected block is the block belonging to the background or the block belonging to the object comprises:
selecting a block that has not been compared with the second image from the plurality of divided blocks belonging to the first image, and searching for a block that corresponds to the selected block having the predetermined size and belonging to the first image from the second image;
checking a position difference between the selected block and the block searched for from the second image to compare the checked position with a position critical value;
when the position difference is smaller than the position critical value, determining that the selected block as a block belonging to the background, and when the position difference is greater than or equal to the position critical value, determining that the selected block is a block belonging to the object.

12. The method of claim 11, wherein the step of searching for the block that corresponds to the selected block comprises :
selecting from the second image a block to be compared with the selected block of the first image;
checking a color difference between the selected block of the first image and the block selected for from the second image; and
when the color difference is smaller than a predetermined color deviation critical value, determining that the selected block of the first image coincides with the block selected from the second image.

13. The method of one of claims 9 to 12, further comprising correcting a focus direction of the first and second images, between the step of obtaining the first and second images, and the step of checking of whether the selected block is the block belonging to the background or the block belonging to the object.

14. The method of claim 13, wherein the step of correcting the focus direction of the first and second images comprises:
measuring a position difference between the block searched from the second image and a corresponding block having the predetermined size and belonging to the first image; and
measuring an average movement value of the block searched for from the second image using the measured position difference, and moving the second image the measured average movement value, to correct a position of the first and second images.

15. The method of claim 14, wherein the block having the predetermined size and belonging to the first image is located in a region having a low possibility that an object exists.

16. The method of claim 15, wherein the block having the predetermined size and belonging to the first image is located around an edge of the first image.

17. A portable terminal for shooting an image of an object comprising:
a first camera module for shooting a first image of an object;
a second camera module for shooting a second image of the object simultaneously with the first camera module; and
an effect processor for finding a block included in a background using the first image and the second image and blurring the block.

18. The portable terminal of claim 17, wherein the blurring comprises:
checking average values of colors and brightness of a plurality of pixels neighboring a pixel contained in the block; and
controlling color and brightness of the pixel contained in the block using the checked average values.

19. The portable terminal of claim 18, wherein the first and second camera modules shoot an image of an object in the same focus direction.

20. The portable terminal of one of claims 17 to 19, wherein the effect processor comprises:
a control unit for dividing the first image into a plurality of blocks each having a predetermined size, and selecting from the plurality of blocks a block to be compared with the second image; and
an effect processing unit for searching for a block that corresponds to the selected block of the first image from the second image, checking whether the block searched from the second image is a block belonging to the background or a block belonging to the object, and when the block searched from the second image is the block belonging to the background, blurring the block searched from the second image.
